# EUROPEAN PATENT SPECIFICATION

(11) **EP 3 205 939 B1**
(45) Date of publication and mention of the grant of the patent: **04.11.2020**
(21) Application number: 17154749.0
(22) Date of filing: 06.02.2017
(51) Int. Cl.: F23R 3/28, F23R 3/34

(54) **GAS TURBINE HAVING FUEL INJECTORS AND METHODS OF FABRICATING SAME**
GASTURBINE MIT BRENNSTOFFEINSPRITZVORRICHTUNG UND HERSTELLUNGSVERFAHREN DAFÜR
TURBINE À GAZ AVEC INJECTEURS DE CARBURANT ET MÉTHODE DE FABRICATION

(30) Priority: 09.02.2016 US 201615019713
(43) Date of publication of application: 16.08.2017
(73) Proprietor: General Electric Company, Schenectady, NY 12345 (US)
(72) Inventor: DICINTIO, Richard Martin, Greenville, SC 29615 (US); HOFFMAN, Seth Reynolds, Greenville, SC 29615 (US); NATARAJAN, Jayaprakash, Greenville, SC 29615 (US)
(74) Representative: Freigutpartners IP Law Firm

(56) References cited:
- US-A1- 2014 144 142
- US-B1- 7 785 100
- US-B1- 8 438 851

## Description

### BACKGROUND

The field of this disclosure relates generally to an axial fuel staging (AFS) system with fuel injectors and, more particularly, to an axial fuel staging (AFS) system with fuel injectors used in a turbine assembly, and a corresponding method for fabricating an axial fuel staging system.

At least some known gas turbine assemblies include a compressor, a combustor, and a turbine. Gas flows into the compressor and is compressed prior to it being mixed with fuel. The resulting mixture is ignited in the combustor to generate combustion gases. The combustion gases are channeled from the combustor through the turbine, thereby driving the turbine which, in turn, may power an electrical generator coupled to the turbine. US 2014/144142 A1 describes a fuel nozzle for use in a turbine engine with a perforated premixer tube, a liquid fuel plenum upstream from the fuel nozzle, and a fuel injector coupled to the liquid fuel plenum and the premixer tube to channel a liquid flow from the liquid fuel plenum into the premixer tube.

Many known combustors have an axial fuel staging (AFS) system for use in injecting fuel into a combustion zone. At least some known AFS systems include a primary fuel injector upstream from a secondary fuel injector such that the primary and secondary fuel injectors inject fuel into the combustion zone at different axial stages in the combustion zone. In that regard, the mixing capability of the secondary fuel injector can influence the operating efficiency and emissions quality of the turbine assembly.

### BRIEF DESCRIPTION

The invention as herein claimed is defined in the independent claims. Further developments of the invention are laid out in the dependent claims

### BRIEF DESCRIPTION OF THE DRAWINGS

Figure 1 is a schematic illustration of an exemplary turbine assembly;
Figure 2 is a schematic illustration of an exemplary axial fuel staging (AFS) system for use in the turbine assembly shown in Figure 1;
Figure 3 is a schematic illustration of a secondary fuel injector that may be used in the AFS system shown in Figure 2;
Figure 4 is a schematic cross-sectional illustration of the secondary fuel injector shown in Figure 3 and taken along plane 4-4 of Figure 3;
Figure 5 is a perspective view of an exemplary array of mixing tubes used in the secondary fuel injector shown in Figure 3; and
Figure 6 is a side elevational view of a mixing tube of the array shown in Figure 5.

### DETAILED DESCRIPTION

The following detailed description illustrates a gas turbine assembly comprising an axial fuel staging system comprising fuel injectors by way of example and not by way of limitation. The description should enable one of ordinary skill in the art to make and use the fuel injectors, and the description describes several embodiments of the fuel injectors, including what is presently believed to be the best modes of making and using the fuel injectors. However not claimed, it is contemplated that the fuel injector as herein disclosed has general application to a broad range of systems in a variety of fields other than gas turbine assemblies.

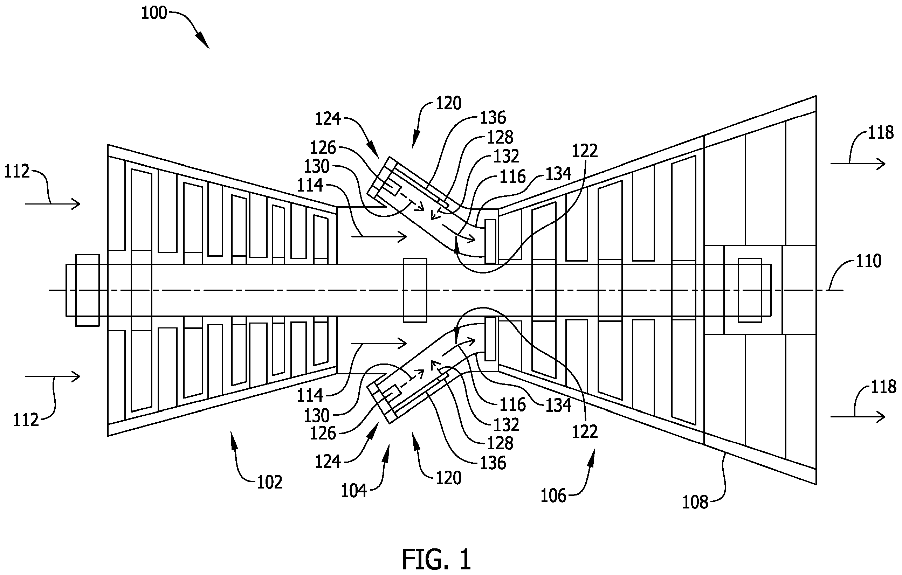

Figure 1 illustrates an exemplary turbine assembly 100. In the exemplary embodiment, turbine assembly 100 is a gas turbine assembly that includes a compressor 102, a combustor 104, and a turbine 106 coupled in flow communication with one another within a casing 108 along a centerline axis 110. In operation, a working gas 112 flows into compressor 102 and is compressed and channeled into combustor 104. Compressed gas 114 is mixed with fuel (not shown) and ignited in combustor 104 to generate combustion gases 116 that are channeled into turbine 106 and then discharged from turbine 106 as exhaust 118.

In the exemplary embodiment, combustor 104 includes a plurality of combustion cans 120. Combustion cans 120 define a combustion zone 122 into which fuel and compressed gas 114 are injected via an axial fuel staging (AFS) system 124. In the exemplary embodiment, AFS system 124 includes a primary fuel injector 126 and a secondary fuel injector 128 axially downstream from primary fuel injector 126. A first mixture 130 of fuel and compressed gas 114 is injected into combustion zone 122 via primary fuel injector 126, and a second mixture 132 of fuel and compressed gas 114 is injected into combustion zone 122 via secondary fuel injector 128. Each secondary fuel injector 128 is coupled to a sleeve assembly 134 that defines part of combustion zone 122, and each secondary fuel injector 128 is supplied with fuel via a conduit 136. In other embodiments, turbine assembly 100 may have any suitable number of fuel injectors arranged in any suitable manner.

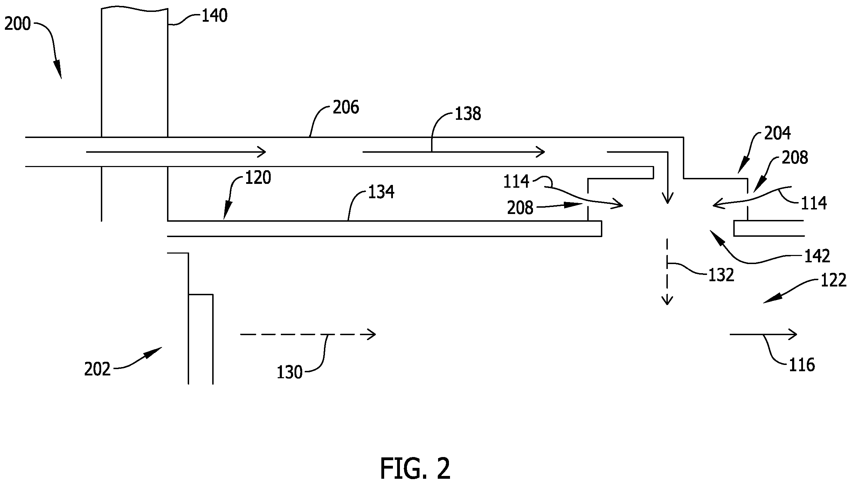

Figure 2 illustrates an exemplary AFS system 200 of the turbine assembly 100. In the exemplary embodiment, AFS system 200 includes a primary fuel injector 202 for injecting a first mixture 130 of fuel 138 and compressed gas 114 into combustion zone 122, and a secondary fuel injector 204 coupled to sleeve assembly 134 for injecting a second mixture 132 of fuel 138 and compressed gas 114 into combustion zone 122 downstream of primary fuel injector 202. Secondary fuel injector 204 is coupled to a conduit 206 that extends through a casing flange 140 supporting combustion cans 120. Fuel 138 is supplied to secondary fuel injector 204 via conduit 206. Secondary fuel injector 204 has a plurality of apertures 208 sized to enable compressed gas 114 to enter secondary fuel injector 204 and to be mixed with fuel 138 from conduit 206 prior to the mixture being injected into combustion zone 122 as second mixture 132. In other embodiments, at least one conduit (not shown) may be coupled to secondary fuel injector 204 for supplying compressed gas 114 to secondary fuel injector 204 in lieu of, or in combination with, apertures 208.

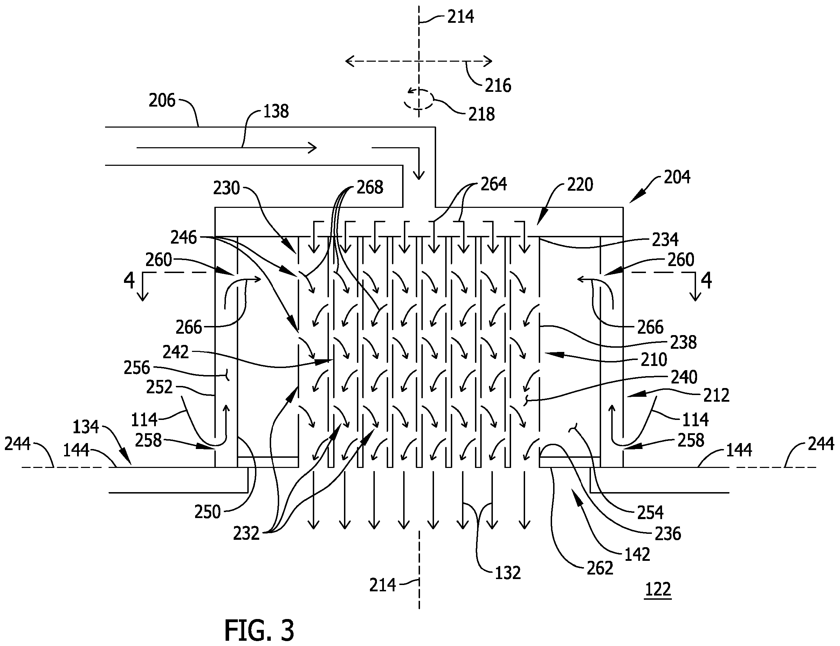

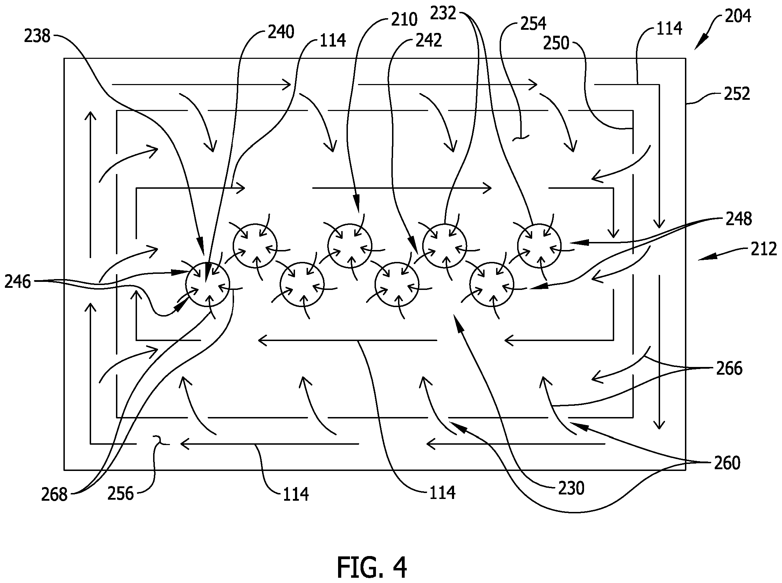

Figures 3 and 4 are schematic illustrations of secondary fuel injector 204 of AFS system 200. According to the invention set forth in the claims, secondary fuel injector 204 includes a nozzle 210 and a housing 212 coupled to nozzle 210. Housing 212 is mounted to sleeve assembly 134 at an opening 142 defined in sleeve assembly 134, and nozzle 210 is oriented within housing 212 to inject second mixture 132 into combustion zone 122 and generally along an injection axis 214. Secondary fuel injector 204 has a radial dimension 216 extending generally perpendicularly to injection axis 214 and a circumferential dimension 218 extending about injection axis 214. As used herein, the term "radius" (or any variation thereof) refers to a dimension extending outwardly from a center of any suitable shape (e.g., a square, a rectangle, a triangle, etc.) and is not limited to a dimension extending outwardly from a center of a circular shape. Similarly, as used herein, the term "circumference" (or any variation thereof) refers to a dimension extending around a center of any suitable shape (e.g., a square, a rectangle, a triangle, etc.) and is not limited to a dimension extending around a center of a circular shape.

The nozzle 210 includes a manifold 220 and an array 230 of mixing tubes 232 coupled to manifold 220. Each mixing tube 232 is generally cylindrical and has an open proximal end 234, an open distal end 236, and a body 238 extending from proximal end 234 to distal end 236, thereby defining a channel 240 from proximal end 234 to distal end 236. Manifold 220 is coupled to conduit 206 such that proximal ends 234 of mixing tubes 232 are in flow communication with conduit 206 across manifold 220. Each mixing tube 232 extends generally linearly from its proximal end 234 to its distal end 236 in a substantially parallel relation to injection axis 214 such that a space 242 is defined between adjacent mixing tubes 232 and such that distal ends 236 of mixing tubes 232 are generally aligned with sleeve assembly 134 (i.e., distal ends 236 are generally oriented along a plane 244 defined by an exterior surface 144 of sleeve assembly 134). Furthermore, each mixing tube 232 includes a plurality of perforations 246 that are spaced apart from each other along body 238 such that perforations 246 are in flow communication with channel 240.

Mixing tubes 232 of array 230 are arranged in an elongated pattern when array 230 is viewed in cross-section as shown in Figure 4. Particularly, mixing tubes 232 are arranged in a pair of side-by-side rows 248, with the mixing tubes 232 in one row 248 being offset (or interspaced with) the mixing tubes 232 in another row 248 such that mixing tubes 232 of array 230 are arranged in a zig-zag pattern. Moreover, although the exemplary array 230 is illustrated with eight mixing tubes 232, array 230 may include any suitable number of mixing tubes 232 in other embodiments. Additionally, mixing tubes 232 may include any suitable number of perforations 246 in other embodiments. Furthermore, although the exemplary nozzle 210 includes mixing tubes 232 that extend generally linearly and are oriented substantially parallel to injection axis 214, in other embodiments, nozzle 210 may have curvilinearly-extending mixing tubes that are oriented substantially parallel with injection axis 214 only at their distal ends. Alternatively, nozzle 210 may include mixing tubes 232 that are shaped and oriented in any suitable manner that facilitates enabling secondary fuel injector 204 to function as described herein.

In the exemplary embodiment, housing 212 includes a radially inner sidewall 250 and a radially outer sidewall 252 that are spaced apart from one another. Inner sidewall 250 circumscribes an interior chamber 254 that is covered by manifold 220 such that nozzle 210 is positioned within interior chamber 254. Moreover, a plenum 256 is defined between inner sidewall 250 and outer sidewall 252 such that plenum 256 circumscribes interior chamber 254, and therefore, nozzle 210. Outer sidewall 252 includes at least one aperture 258 defined therein, and inner sidewall 250 includes a plurality of circumferentially-spaced ports 260 that are in flow communication with interior chamber 254. Housing 212 and/or nozzle 210 also has an integrally-formed partition 262 that opposes manifold 220 to facilitate separating interior chamber 254 from combustion zone 122 (i.e., interior chamber 254 is a substantially enclosed space defined between manifold 220, inner sidewall 250, and partition 262 such that ports 260 provide the only point(s) of entry into interior chamber 254 and perforations 246 provide the only points of exit from interior chamber 254. In some embodiments, housing 212 may also have at least one wall (not shown) that opposes partition 262 across interior chamber 254 to cover interior chamber 254 (e.g., manifold 220 may be mounted to the wall such that mixing tubes 232 extend into interior chamber 254 from the wall). Although plenum 256 completely circumscribes interior chamber 254 in the exemplary embodiment, plenum 256 may extend only partly around interior chamber 254 in other embodiments.

During operation of turbine assembly 100, fuel 138 is supplied to manifold 220 via conduit 206 such that fuel 138 fills manifold 220. A separate stream 264 of fuel 138 flows into each mixing tube 232 via its respective proximal end 234, such that a respective stream 264 flows along a respective channel 240 and is discharged via a respective distal end 236 into combustion zone 122. Meanwhile, compressed gas 114 flows into plenum 256 via aperture(s) 258 to fill plenum 256 with compressed gas 114 (e.g., compressed gas 114 is permitted to flow circumferentially about interior chamber 254 within plenum 256). Compressed gas 114 from plenum 256 then flows into interior chamber 254 via ports 260, such that a separate stream 266 of compressed gas 114 flows substantially radially into interior chamber 254 at each port 260, thereby filling interior chamber 254 with compressed gas 114 (e.g., compressed gas 114 is permitted to flow circumferentially about mixing tubes 232 of nozzle 210 within interior chamber 254). Compressed gas 114 from interior chamber 254 then flows into channels 240 of mixing tubes 232 via perforations 246, such that a separate stream 268 of compressed gas 114 flows substantially radially into each channel 240 at each perforation 246. Compressed gas 114 and fuel 138 are then mixed within channels 240 and injected into combustion zone 122 along injection axis 214 as second mixture 132.

In other embodiments, aperture(s) 258 may be in flow communication with manifold 220, and conduit 206 may be in flow communication with interior chamber 254. As such, compressed gas 114 would flow into channels 240 of mixing tubes 232 via proximal ends 234, and fuel 138 would flow into channels 240 of mixing tubes 232 via perforations 246, thereby mixing compressed gas 114 and fuel 138 within channels 240 for injection into combustion zone 122 along injection axis 214 as second mixture 132. Alternatively, secondary fuel injector 204 may have any suitable configuration that enables compressed gas 114 to flow into channels 240 of mixing tubes 232 via proximal ends 234, and that enables fuel 138 to flow into channels 240 of mixing tubes 232 via perforations 246 (e.g., secondary fuel injector 204 may not have plenum 256 for fuel 138).

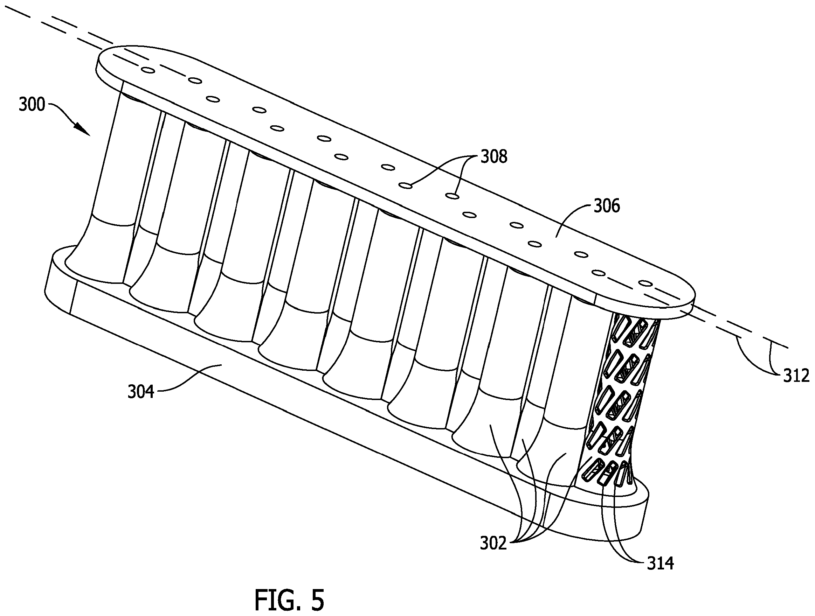

Figure 5 is a perspective view of an exemplary array 300 of mixing tubes 302 for use in nozzle 210. In the exemplary embodiment, mixing tubes 302 of array 300 are integrally formed with a pedestal 304 and a plate 306 such that mixing tubes 302 extend from pedestal 304 to plate 306. Plate 306 has an elongate shape with a plurality of fuel inlet holes 308 formed therein, each of which is in flow communication with a channel (not shown) of a respective mixing tube 302. Pedestal 304 also has an elongate shape with a plurality of outlet holes (not shown), each of which is in flow communication with a channel of a respective mixing tube 302. Array 300 includes sixteen mixing tubes 302 that are arranged in two side-by-side rows 312 such that the mixing tubes 302 of one row 312 are offset (or interspaced with) the mixing tubes 302 of the other row 312. Although only one mixing tube 302 is illustrated as having perforations 314, all mixing tubes 302 of array 300 are perforated in the exemplary embodiment. For example, in some embodiments, all mixing tubes 302 of array 300 may have perforations 314 of the same size, quantity, and pattern. In another example, some mixing tubes 302 of array 300 may have perforations 314 of a first size, shape, and/or pattern, while other mixing tubes 302 of array 300 may have perforations 314 of a different size, shape, and/or pattern. In other embodiments, array 300 may have any suitable number of mixing tubes 302 arranged and perforated in any suitable manner (e.g., array 300 may have less or more than sixteen mixing tubes 302 that are not arranged in rows 312).

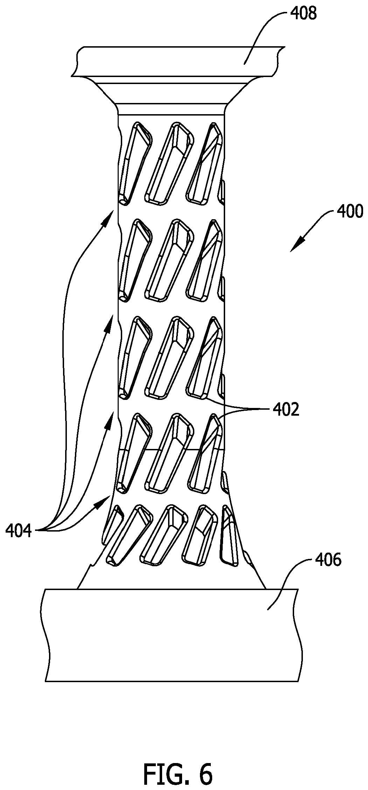

Figure 6 is a side elevation view of an exemplary mixing tube 400 of array 300. In the exemplary embodiment, mixing tube 400 is generally cylindrical and has perforations 402 that are all the same size and shape (i.e., each perforation 402 has a substantially rectangular shape). Moreover, perforations 402 are arranged in rows 404 that extend from a pedestal 406 to a plate 408 in a substantially helical manner. In other embodiments, perforations 402 may have any suitable size, shape, and/or pattern. For example, perforations 402 may not all be the same size and shape in other embodiments of mixing tube 400 (e.g., mixing tube 400 may have at least two differently sized or shaped perforations 402 in some embodiments). In another example, perforations 402 may not be arranged in substantially helical rows 404 but, rather, may be arranged in another suitable pattern (e.g., a pattern that does not have identifiable rows) or a may be arranged in a manner that appears to be amorphous (i.e., an arrangement for which there is no readily identifiable pattern). Alternatively, mixing tube 400 may have any suitable configuration that facilitates enabling nozzle 210 to function as described herein.

The methods and systems described herein facilitate enhanced mixing of fuel and compressed gas in a combustor. More specifically, the methods and systems facilitate positioning a fuel injection tube in the middle of a flow of compressed gas through a fuel injector, thereby enhancing the distribution of fuel throughout the compressed gas. Thus, the methods and systems facilitate enhanced mixing of fuel and compressed gas in a secondary fuel injector of an AFS system in a turbine assembly. The methods and systems therefore facilitate improving the overall operating efficiency of a combustor in a turbine assembly. This increases the output and reduces the cost associated with operating a combustor in a turbine assembly.

Exemplary embodiments of a gas turbine assembly comprising fuel injectors and methods of fabricating the same are described above in detail. The methods and systems described herein are not limited to the specific embodiments described herein, but rather, while the invention has been described in terms of various specific embodiments, those skilled in the art will recognize that the invention can be practiced with modification within the scope of the claims.

## Claims

1. A gas turbine assembly (100) comprising an axial fuel staging (AFS) system (200), the assembly (100) including a combustion zone (122) defined in part by a sleeve assembly (134), said AFS system (200) comprising:
a primary fuel injector (202); and
a secondary fuel injector (204) downstream from the primary fuel injector (202) comprising:
a manifold (220);
a housing (212) coupled to said manifold (220) and mounted to the sleeve assembly (134) at an opening (142) defined in the sleeve assembly (134), said housing (212) defines an interior chamber (254) therein; and
a nozzle (210) positioned within said interior chamber (254), said nozzle (210) comprising an array (230, 300) of mixing tubes (232, 302, 400) that each comprise a proximal end (234), a distal end (236), and a perforated body (238) including a plurality of perforations (246, 314, 402) extending therebetween, said proximal ends (234) coupled in flow communication with said manifold (220) and said perforations (246, 314, 402) of each body in flow communication with said interior chamber (254) to facilitate discharging a mixture of fuel and compressed gas from said distal ends (236); wherein said array (230, 300) comprises a plurality of rows (248, 312) of said mixing tubes (232, 302, 400); and wherein said mixing tubes (232, 302, 400) in a first of said rows (248, 312) are offset relative to said mixing tubes (232, 302, 400) in a second of said rows (248, 312).

2. A gas turbine assembly (100) in accordance with claim 1, wherein said housing (212) comprises an inner wall (250) and an outer wall (252) defining a plenum (256) that extends about said interior chamber (254), said inner wall (250) comprising a plurality of ports (260) that couple said plenum (256) in flow communication with said interior chamber (254).

3. A gas turbine assembly (100) in accordance with claim 1 or 2, wherein each said mixing tube (232, 302, 400) extends generally linearly from its respective proximal end (234) to its respective distal end (236).

4. A method of fabricating an axial fuel staging (AFS) system (200) of a gas turbine assembly (100), said method comprising:
providing a primary fuel injector (202); and
providing a secondary fuel injector (204) downstream from the primary fuel injector (202);
coupling a manifold (220) to a housing (212) that defines an interior chamber (254) therein, the housing (212) being mounted on a sleeve assembly (134) at an opening (142) defined in the sleeve assembly (134), said sleeve assembly (134) defining in part a combustion zone (122);
positioning a nozzle (210) within the interior chamber of the housing, wherein the nozzle (210) has an array of mixing tubes (232, 302, 400) that each have a proximal end (234), a distal end (236), and a perforated body (238) therebetween; and
coupling the proximal ends (234) of the mixing tubes (232, 302, 400) in flow communication with the manifold (220) such that the perforations (246, 314, 402) of each body are in flow communication with the interior chamber (254) to facilitate discharging a mixture of fuel and compressed gas from the distal ends (236); providing said array (230, 300) with a plurality of rows (248, 312) of said mixing tubes (232, 302, 400); and providing said mixing tubes (232, 302, 400) in a first of said rows (248, 312) offset relative to said mixing tubes (232, 302, 400) in a second of said rows (248, 312).

## Patentansprüche

1. Gasturbinenbaugruppe (100), umfassend ein axiales Brennstoffstufungs-(AFS)-System (200), wobei die Baugruppe (100) eine Verbrennungszone (122) einschließt, die teilweise durch eine Hülsenbaugruppe (134) definiert ist, wobei das AFS-System (200) Folgendes umfasst:
eine primäre Brennstoffeinspritzvorrichtung (202); und
eine sekundäre Brennstoffeinspritzvorrichtung (204) stromabwärts der primären Brennstoffeinspritzvorrichtung (202), umfassend:
einen Verteiler (220);
ein Gehäuse (212), das an den Verteiler (220) gekoppelt ist und an einer Öffnung (142), die in der Hülsenbaugruppe (134) definiert ist, an die Hülsenbaugruppe (134) montiert ist, wobei das Gehäuse (212) eine Innenkammer (254) darin definiert; und
eine Düse (210), die innerhalb der Innenkammer (254) positioniert ist, wobei die Düse (210) eine Anordnung (230, 300) von Mischrohren (232, 302, 400) umfasst, die jeweils ein proximales Ende (234), ein distales Ende (236) und einen perforierten Körper (238) umfassen, der eine Vielzahl von Perforationen (246, 314, 402) einschließt, die sich dazwischen erstrecken, wobei die proximalen Enden (234) in Strömungsverbindung mit dem Verteiler (220) gekoppelt sind und die Perforationen (246, 314, 402) jedes Körpers in Strömungsverbindung an die Innenkammer (254) stehen, um das Abgeben einer Mischung aus Brennstoff und verdichtetem Gas aus den distalen Enden (236) zu ermöglichen; wobei die Anordnung (230, 300) eine Vielzahl von Reihen (248, 312) der Mischrohre (232, 302, 400) umfasst; und wobei die Mischrohre (232, 302, 400) in einer ersten der Reihen (248, 312) relativ zu den Mischrohren (232, 302, 400) in einer zweiten der Reihen (248, 312) versetzt sind.

2. Gasturbinenbaugruppe (100) nach Anspruch 1, wobei das Gehäuse (212) eine Innenwand (250) und eine Außenwand (252) umfasst, die ein Plenum (256) definieren, das sich um die Innenkammer (254) erstreckt, wobei die Innenwand (250) eine Vielzahl von Öffnungen (260) umfasst, die das Plenum (256) in Strömungsverbindung an die Innenkammer (254) koppeln.

3. Gasturbinenbaugruppe (100) nach Anspruch 1 oder 2, wobei sich jedes Mischrohr (232, 302, 400) im Allgemeinen linear von seinem jeweiligen proximalen Ende (234) zu seinem jeweiligen distalen Ende (236) erstreckt.

4. Verfahren zum Herstellen eines axialen Brennstoffstufungs-(AFS)-Systems (200) einer Gasturbinenbaugruppe (100), wobei das Verfahren Folgendes umfasst:
Bereitstellen einer primären Brennstoffeinspritzvorrichtung (202); und
Bereitstellen einer sekundären Brennstoffeinspritzvorrichtung (204) stromabwärts von der primären Brennstoffeinspritzvorrichtung (202);
Koppeln eines Verteilers (220) an ein Gehäuse (212), das eine Innenkammer (254) darin definiert, wobei das Gehäuse (212) an einer Öffnung (142) an eine Hülsenbaugruppe (134) montiert wird, die in der Hülsenbaugruppe (134) definiert ist, wobei die Hülsenbaugruppe (134) teilweise eine Verbrennungszone (122) definiert;
Positionieren einer Düse (210) innerhalb der Innenkammer des Gehäuses, wobei die Düse (210) eine Anordnung von Mischrohren (232, 302, 400) aufweist, die jeweils ein proximales Ende (234), ein distales Ende (236) und einen perforierten Körper (238) dazwischen aufweisen; und
Koppeln der proximalen Enden (234) der Mischrohre (232, 302, 400) in Strömungsverbindung an den Verteiler (220), so dass die Perforationen (246, 314, 402) jedes Körpers in Strömungsverbindung mit der Innenkammer (254) stehen, um das Abgeben einer Mischung aus Brennstoff und komprimiertem Gas aus den distalen Enden (236) zu ermöglichen; Versehen der Anordnung (230, 300) mit einer Vielzahl von Reihen (248, 312) der Mischrohre (232, 302, 400); und Bereitstellen der Mischrohre (232, 302, 400) in einer ersten der Reihen (248, 312) versetzt relativ zu den Mischrohren (232, 302, 400) in einer zweiten der Reihen (248, 312).

## Revendications

1. Ensemble de turbine à gaz (100) comprenant un système d'étagement axial de carburant (AFS) (200), l'ensemble (100) incluant une zone de combustion (122) définie en partie par un ensemble de manchon (134), ledit système AFS (200) comprenant :
un injecteur de carburant primaire (202) ; et
un injecteur de carburant secondaire (204) en aval de l'injecteur de carburant primaire (202) comprenant :
un collecteur (220) ;
un boîtier (212) couplé audit collecteur (220) et monté sur l'ensemble de manchon (134) au niveau d'une ouverture (142) définie dans l'ensemble de manchon (134), ledit boîtier (212) définit une chambre intérieure (254) à l'intérieur de celui-ci ; et
une buse (210) disposée dans ladite chambre intérieure (254), ladite buse (210) comprenant une série (230, 300) de tubes de mélange (232, 302, 400) qui comprennent chacun une extrémité proximale (234), une extrémité distale (236), et un corps perforé (238) incluant une pluralité de perforations (246, 314, 402) s'étendant entre elles, lesdites extrémités proximales (234) couplées en communication fluidique avec ledit collecteur (220) et lesdites perforations (246, 314, 402) de chaque corps en communication fluidique avec ladite chambre intérieure (254) pour faciliter la décharge d'un mélange de carburant et de gaz comprimé desdites extrémités distales (236) ; dans lequel ladite série (230, 300) comprend une pluralité de rangées (248, 312) desdits tubes de mélange (232, 302, 400) ; et dans lequel lesdits tubes de mélange (232, 302, 400) dans une première desdites rangées (248, 312) sont décalés par rapport auxdits tubes de mélange (232, 302, 400) dans une seconde desdites rangées (248, 312).

2. Ensemble de turbine à gaz (100) selon la revendication 1, dans lequel ledit boîtier (212) comprend une paroi interne (250) et une paroi externe (252) définissant un plénum (256) qui s'étend autour de ladite chambre intérieure (254), ladite paroi interne (250) comprenant une pluralité d'orifices (260) qui se couplent audit plénum (256) en communication fluidique avec ladite chambre intérieure (254).

3. Ensemble de turbine à gaz (100) selon la revendication 1 ou 2, dans lequel chacun desdits tubes de mélange (232, 302, 400) s'étend généralement de manière linéaire depuis son extrémité proximale respective (234) vers son extrémité distale respective (236).

4. Procédé de fabrication d'un système d'étagement axial de carburant (AFS) (200) d'un ensemble de turbine à gaz (100), ledit procédé comprenant :
la fourniture d'un injecteur de carburant primaire (202) ; et
la fourniture d'un injecteur de carburant secondaire (204) en aval de l'injecteur de carburant primaire (202) ;
le couplage d'un collecteur (220) à un boîtier (212) qui définit une chambre intérieure (254) à l'intérieur de celui-ci, le boîtier (212) étant monté sur un ensemble de manchon (134) au niveau d'une ouverture (142) définie dans l'ensemble de manchon (134), ledit ensemble de manchon (134) définissant en partie une zone de combustion (122) ;
le positionnement d'une buse (210) dans la chambre intérieure du boîtier, dans lequel la buse (210) possède une série de tubes de mélange (232, 302, 400) qui possèdent chacun une extrémité proximale (234), une extrémité distale (236) et un corps perforé (238) entre eux ; et
le couplage des extrémités proximales (234) des tubes de mélange (232, 302, 400) en communication fluidique avec le collecteur (220) de telle sorte que les perforations (246, 314, 402) de chaque corps sont en communication fluidique avec la chambre intérieure (254) pour faciliter la décharge d'un mélange de carburant et de gaz comprimé des extrémités distales (236) ; fournissant à ladite série (230, 300) une pluralité de rangées (248, 312) desdits tubes de mélange (232, 302, 400) ; et fournissant lesdits tubes de mélange (232, 302, 400) dans une première desdites rangées (248, 312) décalés par rapport auxdits tubes de mélange (232, 302, 400) dans une seconde desdites rangées (248, 312).
